# EUROPEAN PATENT SPECIFICATION

(11) **EP 0 636 222 B1**
(45) Date of publication and mention of the grant of the patent: **18.09.1996**
(21) Application number: 93919466.8
(22) Date of filing: 23.08.1993
(51) Int. Cl.: F16J 15/40, B23Q 11/00

(54) **WIPING SEAL WITH MEANS FOR APPLYING FLUID PRESSURE TO SAID SEAL**
ABSTREIFENDE DICHTUNG UND MITTEL ZUM AUFBRINGEN VON FLUIDDRUCK AUF DIESE DICHTUNG
JOINT FROTTANT POURVU D'UN MOYEN D'APPLICATION DE PRESSION FLUIDE AUDIT JOINT

(30) Priority: 19.09.1992 GB 9219873
(43) Date of publication of application: 01.02.1995
(73) Proprietor: SYSTEMATIC DRILL HEAD COMPANY LIMITED, Coventry, Warwickshire CV3 2AS (GB)
(72) Inventor: CHILD, Robin Edward, Leamington Spa, Warwickshire CV31 1LD (GB)
(74) Representative: Hands, Horace Geoffrey
(86) International application number: PCT/GB93/01791
(87) International publication number: WO 94/07061

(56) References cited:
- DE-A- 2 212 165
- DE-A- 3 438 755
- DE-C- 2 709 243
- GB-B- 1 147 787
- US-A- 4 189 157

## Description

This invention relates to machine tool spindles which support a cutting tool at one end and are journalled in bearings. It is usual to supply coolant/rinsing fluid such as suds to the tool, and it is important to prevent that fluid reaching the bearings. It is also usual to supply lubricant to the bearings and it is also desirable to prevent that lubricant leaking externally. So one or more seals are interposed between the bearings and cutting tool. This creates problems.

It is usual to employ wiping seals which maintain contact between rotating and non-rotating parts even when the rotation ceases. The wiping seal has to be resiliently held in place. It is known to use so-called V -rings which comprise a ring to fit tightly on the spindle and an integral radial flange, made from a slightly resilient material such as a suitable plastic or rubber. However, the wiping creates friction, which leads to temperature increase and this call lead to inaccuracy in the machining operation because the spindle centre positions will vary between cold and hot dimensions. Sometimes the shaft needs to be locally hardened or provided with for example ceramic surfaces as a seal component and to reduce wear and that also is expensive.

Labyrinth seals are often employed to avoid friction and its consequent heat and wear but multiple component labyrinths complicate the design, increase expense, and require additional length which is a disadvantage in many designs.

Another well known seal system employs radially extending flanges freely located so that liquid - lubricant or coolant - creeping along the spindle will reach the flange and be thrown off by centrifugal force into an annular collector space. But these, like labyrinth seals are primarily and sometimes exclusively useful when the spindle is in use. When stopped for any reason, undesired flow can occur from liquids already in place.

DE 34 38 755 A discloses a shaft seal in which a ring is mounted for rotation with the shaft and is normally resiliently urged against the stationary part and that part is provided with many small holes or a narrow gap or is porous so that air can be blown through to displace the lip out of contact. The lip is displaced out of contact by centrifugal force as the shaft speed increases and/or can be lifted by the air pressure at lower speeds.

In DE 27 09 243 A a pair of lip seals are provided on opposite faces of the stationary part one of which is intended to be lifted by fluid pressure and the other of which is intended to be pressed against the stationary part by the fluid pressure. This provides a particular flow path through the seal for the fluid pressure but leads to friction from the pressed seal. Finally, US-A-4 189 157 is concerned with providing a seal between high pressure and low pressure regions using ring seals which are urged towards the rotating shaft by the high pressure and balanced so as to reduce friction, by the low pressure.

The object of the invention is to provide an improved and simplified design.

According to the invention, a machine tool spindle arrangement comprises a spindle supported by bearings and extending in succession through said bearings, then through a fixed part and then towards an end adapted to be fixed to a cutting tool or the like; at least one wiping seal which is mounted on the spindle or the fixed part and normally makes contact with the fixed part or the spindle, and means for applying fluid pressure to said at least one seal for displacing the same out of contact,
characterised in that
said fixed part has a small clearance between its bore and spindle, and has a rebate between its opposite faces,
a pair of said wiping seals is provided, one associated with each of said faces,
each seal being located in a corresponding collection chamber,
said fixed part has a passage extending therethrough and opening to the rebate for delivery of said fluid pressure for flow axially in both directions through said small clearance to both seals,
and
both said chambers have vent passages for escape of fluid pressure entrained with fluid arriving at the corresponding seal after seepage along the spindle from either direction.

The applied fluid pressure, acts as a purging gas. The effect of the purging gas is to displace the parts to a non-contacting and hence non-friction position, and also enables the seepage to escape, for exhaust via drain passages.

Hence, when there is no purge gas the seal is a contact seal. When there is purge gas, the gas flow will prevent liquid flow in the counter-current direction through the seal, and when there is purge gas and spindle (including the seal) rotation, the seal can act to throw off liquid which reaches it.

Preferably the pair of such seals oppositely inclined to form a V shape. The gas may be air.

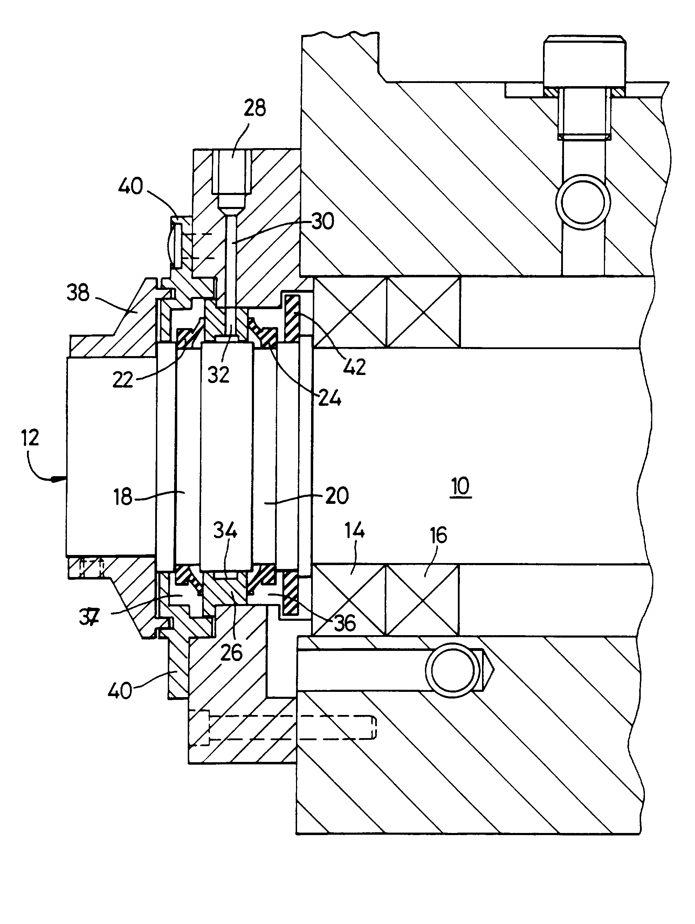

One presently preferred embodiment of the invention is now more particularly described with reference to the accompanying drawing wherein the sole figure is a fragmentary sectional elevation of a single spindle. Those skilled in the machine tool art will recognise that multi-spindle assemblies are usual, and will realise that the invention may be employed on each and all of them.

In the drawing, the spindle is indicated by the reference numeral 10 and end 12 is adapted in someway to carry the cutting tool (not shown). Bearings, diagrammatically indicated by the references 14,16, journal the spindle.

In this embodiment the spindle has a pair of shallow peripheral grooves 18,20. Each groove supports a V -ring 22,24 comprising a ring unitary with a radial flange which is inclined, i.e. the flange is a frusto-cone. The V -ring is made of a slightly resilient and slightly flexible synthetic resin as mentioned. The shape of the ring part cooperates with the corresponding groove to provide axial location. The resilience allows assembly by stretching (ring enlargement) to pass over the larger diameter portion of the spindle and then elastic recovery snaps the ring into the groove.

The spindle extends through a fixed stationary component 26 which has a small clearance between its bore and the spindle. The parallel faces of the fixed component form wiping surfaces which the two V -rings contact resiliently when stationary.

Air at a suitable pressure is supplied by a port 28 to flow through passages 30 32 and reach the rebate 34 in component 26 and then to flow axially in both directions through the small clearance and this deflects both flanges against their resilience so that they become slightly spaced from the component 26. This is done when the spindle is rotated. Consequently the lips of the seals make contact only when there is no air and when air is supplied and the spindle is rotated there is no friction.

The required air pressure depends upon the flinger characteristics, for example flexibility and resilience, but values as low as 0.042kg/sq.cm (0.6psi) have been found effective experimentally and a vlue of 0.14kg/sq.cm (2psi) is typical.

When in operation it will be appreciated that the cutting fluid is flung and blown from the ring 22 and lubricant from ring 24. In each case the effect is to throw the liquid to the outer and stationary wall of a collector chamber 37,36 for drainage through ports at the bottom of the chambers.

The drawing also shows a plate 40 and a further flinger disc 42 which protect the resilient material from direct impact by high velocity fluids.

A further front metallic flinger 38 with labyrinth seal to plate 40 is shown but at present is thought to be unnecessary to the fundamental operation of the invention.

## Claims

1. A machine tool spindle arrangement comprising:
a spindle (10) supported by bearings (14,16) and extending in succession through said bearings, then through a fixed part (26) and then towards an end adapted to be fixed to a cutting tool or the like; at least one wiping seal (22,24) which is mounted on the spindle (10) or fixed part (26) and normally makes contact with the fixed part (26) or spindle (10), and
means (28,30,32) for applying fluid pressure to said at least one seal (22,24) for displacing the same out of said contact
characterised in that
said fixed part (26) has a small clearance between its bore and spindle (10), and has a rebate (34) between its opposite faces,
a pair of said wiping seals (22,24) is provided, one associated with each of said faces,
each seal (22,24) being located in a corresponding collection chamber (36,37),
said fixed part (26) has a passage (32) extending therethrough and opening to the rebate (34) for delivery of said fluid pressure for flow axially in both directions through said small clearance to both seals, and that
both said chambers (36,37) have vent passages for escape of fluid pressure entrained with fluid arriving at the corresponding seal after seepage along the spindle from either direction.

2. A machine tool spindle arrangement as claimed in Claim 1 where the seals are oppositely inclined to form a V shape.

3. A machine tool spindle arrangement as claimed in Claim 1 wherein the purge gas is air at a pressure about 0.14 kg/sq. cm.

4. A machine tool spindle arrangement as claimed in any preceding claim wherein the seals are mounted on the spindle for rotation therewith whereby, at high rotational speeds they may lift and fling off liquid due to centrifugal force.

## Patentansprüche

1. Werkzeugmaschinen-Spindelanordnung, enthaltend
eine Spindel (10), die von Lagern (14, 16) getragen wird und sich nacheinander durch diese Lager, dann durch ein feststehendes Bauelement (26) und schließlich zu einem Ende erstreckt, welches so gestaltet ist, daß es mit einem Schneidwerkzeug oder ähnlichem verbunden werden kann; wenigstens eine Abstreifdichtung (22, 24), die auf der Spindel (10) oder dem feststehenden Bauelement (26) angebracht ist und normalerweise mit dem feststehenden Bauelement (26) oder der Spindel (10) in Kontakt steht; sowie Mittel (28, 30, 32), um einen Fluiddruck auf wenigstens eine der Dichtungen (22, 24) auszuüben und sie auf diese Weise aus der Kontaktlage zu bringen, dadurch gekennzeichnet, daß
das feststehende Bauelement (26) einen kleinen Zwischenraum zwischen seiner Bohrung und der Spindel (10) sowie eine Aussparung (34) zwischen seinen gegenüberliegenden Seiten aufweist,
ein Paar von Abstreifdichtungen (22, 24) vorgesehen ist, von denen jeweils eine einer dieser Seiten zugeordnet ist,
jede Dichtung (22, 24) in einer entsprechenden Sammelkammer (36, 37) angeordnet ist,
das feststehende Bauelement (26) einen Durchgang (32) aufweist, der sich durch dieses hindurch erstreckt und in die Aussparung (34) mündet, so daß der Fluiddruck dorthin gelangen und dann in beide Richtungen axial durch den kleinen Zwischenraum zu beiden Dichtungen fließen kann,
und daß beide Kammern (36, 37) Auslaßöffnungen zur Abgabe des Fluiddrucks besitzen, der mit dem Fluid eingetragen wird, das an der jeweiligen Dichtung ankommt, nachdem es von einer der beiden Richtungen her an der Spindel entlanggesickert ist.

2. Werkzeugmaschinen-Spindelanordnung nach Anspruch 1, dadurch gekennzeichent, daß die Dichtungen gegeneinander so geneigt sind, daß sie eine "V"-Formation bilden.

3. Werkzeugmaschinen-Spindelanordnung nach Anspruch 1, dadurch gekennzeichnet, daß das Reinigungsgas aus Luft mit einem Druck von etwa 0,14 kg/cm² besteht.

4. Werkzeugmaschinen-Spindelanordnung nach einem der vorangegangenen Ansprüche, dadurch gekennzeichnet, daß die Dichtungen auf der Spindel so angebracht sind, daß sie sich mit ihr drehen können, wodurch sie bei hohen Drehgeschwindigkeiten angehoben werden und aufgrund der Zentrifugalkraft Flüssigkeit wegschleudern können.

## Revendications

1. Disposition d'arbre de machine-outil comprenant : un arbre (10) supporté par des paliers (14,16) et traversant successivement les dits paliers, puis une partie fixe (26) jusqu'à une extrémité destinée à être fixée à un outil de coupe ou similaire ; au moins un joint frottant (22,24) monté sur l'arbre (10) ou sur la partie fixe (26) et venant normalement en contact avec la partie fixe (26) ou l'arbre (10), et des moyens (28, 30, 32) pour appliquer une pression de fluide au dit au-moins un joint frottant (22, 24) afin de déplacer celui-ci hors du dit contact,
caractérisé en ce que
la dite partie fixe (26) présente un léger jeu entre son alésage et l'arbre (10), et comporte un rétrécissement (34) entre ses façes opposées,
deux dits joints frottants (22,24) sont prévus, un d'entre eux étant associé à chacune des dites faces, chaque joint (22,24) se trouve dans une chambre réceptrice (36,37) correspondante,
la dite partie fixe (26) comporte un passage (32) qui la traverse et qui débouche sur le rétrécissement (34) pour libérer la dite pression de fluide de façon qu'elle s'écoule axialement dans les deux directions, en passant par le dit léger jeu, vers les deux joints,
et en ce que
les deux dites chambres (36,37) présentent des passages de décharge pour laisser échapper la pression de fluide entraînée avec le fluide qui arrive au joint correspondant après suintement le long de l'arbre à partir de chaque direction.

2. Disposition d'arbre de machine-outil selon la revendication 1, dans laquelle les joints sont inclinés de façon opposée pour présenter une forme en V.

3. Disposition d'arbre de machine-outil selon la revendication 1, dans laquelle le gaz de purge est de l'air à une pression d'environ 0,14 kg/cm2.

4. Disposition d'arbre de machine-outil selon l'une quelconque des revendications précédentes, dans laquelle les joints sont montés sur l'arbre de façon à tourner avec lui, de sorte qu'à de fortes vitesses de rotation ils peuvent, sous l'effet de la force, se soulever et laisser passer du liquide.
